(19) Europäisches Patentamt
European Patent Office
Office européen des brevets

(11) **EP 3 598 090 A1**

(12) **EUROPEAN PATENT APPLICATION**

(43) Date of publication:
**22.01.2020 Bulletin 2020/04**

(51) Int Cl.:
**G01J 5/00** (2006.01)    **G01J 5/52** (2006.01)
**G01J 5/60** (2006.01)    **G01J 5/10** (2006.01)

(21) Application number: **18183783.2**

(22) Date of filing: **16.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Wildermuth, Stephan**
  **69514 Laudenbach (DE)**

• **Gebhardt, Jörg**
  **55130 Mainz (DE)**
• **König, Kai**
  **69190 Walldorf (DE)**
• **Szász, Paul**
  **68723 Plankstadt (DE)**

(74) Representative: **Schmidt, Karl Michael**
**ABB AG**
**GF-IP**
**Oberhausener Strasse 33**
**40472 Ratingen (DE)**

(54) **APPARATUS FOR TEMPERATURE SENSING OF AN OBJECT OF INTEREST**

(57)    The present invention relates to an apparatus (10) for temperature sensing of an object of interest. It is described to acquire (210) with an infrared camera image data of an object of interest. The image data of the object of interest is provided (220) to a processing unit. The processing unit determines (230) a first signal reading on the basis of the image data of the object of interest. A reference object is heated (240) with a heater. A surface temperature signal of a surface of the reference object is determined (250) with a temperature sensor. The infrared camera acquires (260) image data of the reference object. The image data of the reference object is provided (270) to the processing unit. The processing unit determines (280) a second signal reading on the basis of the image data of the reference object. The processing unit controls (290) the heater until a magnitude of the first signal reading is equal to a magnitude of the second signal reading. An output unit outputs (300) the temperature signal determined by the temperature sensor when the magnitude of the first signal reading is equal to the magnitude of the second signal reading.

Fig. 1

## Description

### FIELD OF THE INVENTION

The present invention relates to apparatuses for temperature sensing of an object of interest, systems for temperature sensing of an object of interest, and methods for temperature sensing of an object of interest.

### BACKGROUND OF THE INVENTION

Thermography based on infrared cameras is widely used for hot spot detection in electrical equipment. Typically the hot spot is identified by a human operator. Severity of the hot spot is often estimated not by evaluating the absolute temperature reading of the hot spot but by relative means: For example the reading at the hot spot location is compared to the reading at a second comparable location e.g. the temperature readings of two phases of a three-phase switchgear busbar system are compared". Often the evaluation is based on experience and visual impression of the service technician rather than on the absolute temperature difference.

The reason for this is that robust determination of a precise absolute temperature value is hard to achieve as the reading provided by an IR camera varies not only with object temperature but with environmental factors that affect the IR camera and the object being interrogated.

### SUMMARY OF THE INVENTION

Therefore, it would be advantageous to have an improved technology for the determining the true temperature of an object of interest.

The object of the present invention is solved with the subject matter of the independent claims, wherein further embodiments are incorporated in the dependent claims. It should be noted that the following described aspects of the invention apply also for the apparatuses for temperature sensing of an object of interest, the systems for temperature sensing of an object of interest, and the methods for temperature sensing of an object of interest.

In a first aspect, there is provided an apparatus for temperature sensing of an object of interest, comprising:

- an infrared camera;
- a reference object;
- a heater or cooler;
- a temperature sensor;
- a processing unit; and
- an output unit.

The infrared camera is configured to acquire image data of an object of interest and acquire image data of the reference object, ideally data of the object of interest and the reference object is present within one image of the camera. The infrared camera is configured to provide the image data of the object of interest and the image data of the reference object to the processing unit. The processing unit is configured to determine a first signal reading on the basis of the image data of the object of interest and determine a second signal reading on the basis of the image data of the reference object. The heater is configured to heat the reference object. The temperature sensor is configured to determine a surface temperature signal of the reference object. The processing unit is configured to control the heater until a magnitude of the first signal reading is equal to a magnitude of the second signal reading. The output unit is configured to output the temperature signal determined by the temperature sensor when the magnitude of the first signal reading is equal to the magnitude of the second signal reading.

In this manner, the temperature of the object of interest can be determined in an accurate and robust way. The effects of changes in the surrounding air temperature, which can lead to a change in the temperature of the IR sensor/detector of the IR camera, do not have an impact on the measured temperature, which can otherwise lead to measurement errors. Also, the effects of absorption of infrared radiation in the medium between IR sensor and objectes, e.g.atmosphere, other gases, oils including transformer oils, or deposits on the optics of the infrared camera, that could affect the temperature determination, are mitigated, as are the effects of dust, oil or other contaminants or dirts that can change the emissivity of the object of interest because the reference object can remain in place and be similarly affected. Thus, the effects of ambient air temperature that can change of the temperature of the IR sensor itself are mitigated, which otherwise for low-cost thermopile sensors often results in an increased measurement error. Also, absorption of IR radiation in the optical path between the IR sensor/detector of the IR camera and object of interest (e.g. humidity change, gas density or composition change, dust) or deposits on the lens of the IR sensor (dust, water condensation) do not affect the accuracy of the temperature determination.

In summary, error sources that can affect the optical system (lens, sensor body, optical path, surface emissivity) are mitigated.

In this way, the robustness of infrared sensing of objects with infrared cameras is enhanced.

In an example, the heater is attached to the reference object.

This provides for simple and convenient heating of the reference object, and control of that heating.

In an example, the temperature sensor is attached to the reference object.

In this way the surface temperature of the reference object can be accurately determined.

In an example, the temperature sensor is a thermocouple.

Thus a simple and convenient way, and cost effective way, is provided for the accurate determination of the temperature of the reference object used in determining the temperature of the object of interest.

In an example, the temperature sensor is a Pt100 sensor.

In an example, a surface of the reference object is configured to match a surface of the object of interest.

In this manner, the following can be mitigated: the change of the emissivity of the object surface due to deposits, e.g. dust or oil; the variation of emissivity with temperature as well as with wavelength; and the long term degradation of the emissivity due to changes in the surface (e.g. oxidation).

Thus, the temperature measurement has an increased accuracy over wide temperature ranges, because the effects of emissivity variation with temperature are mitigated and the effects of the long term degradation in emissivity due to changes in surfaces are also mitigated. To put this another way, the sensitivity to uncertainties of the emissivity of the object to be measured are strongly reduced.

In an example, a surface treatment of the reference object is the same as a surface treatment of the object of interest.

In an example, a coating or paint on the surface of the reference object is the same as a coating or paint on the surface of the object of interest.

This helps to ensure that the objects have the same emissivity, and provides for more accurate temperature determination.

In an example, the reference object is hollow.

In other words, because only the surface features of the reference body play a role, not its interior, in principle a hollow carrier-hull with a thin surface of coating material can suffice. This provides for cost effective reference objects.

In an example, a material of the reference object has a high heat conductivity.

In this way, a homogeneous temperature field can be generated on the surface of the reference object.

In an example, a shape of the reference object is quadrilateral.

Thus, standard detectors have square or rectangular shaped arrays, and having a reference object of this shape provides for optimal pixel usage.

In an example, a surface of the reference object is configured to have a high emissivity.

In this manner, signal to noise is improved.

In an example, the magnitude of an angle between a normal to a detector of the infrared camera and the reference object is substantially the same as the magnitude of an angle between the normal to the detector of the infrared camera and the object of interest.

In an example, the processing unit is configured to acquire the second signal and the temperature signal whilst controlling the heater to sweep the temperature of the reference object over a range of interest.

In this manner, the pixel signal as a function of temperature can be determined that can be used as a characteristic for regular self-calibration of the set-up.

In general more than one reference object (e. g. with different surface properties and each equipped with heater and reference measurement) could be used to determine the temperature of objects of interest having different surface emissivity.

In a second aspect, there is provided an apparatus for temperature sensing of an object of interest, comprising:

- an infrared camera;
- a processing unit; and
- an output unit.

The infrared camera has a detector. A first plurality of pixels of the detector has a first wavelength selectivity. A second plurality of pixels of the detector has a second selectivity different to the first wavelength selectivity. The infrared camera is configured to acquire image data of an object of interest comprising utilization of at least one of the first plurality of pixels and utilization of at least one of the second plurality of pixels. The infrared camera is configured to provide the image data of the object of interest to the processing unit. The processing unit is configured to determine a first signal reading on the basis of the image data comprising the at least one of the first plurality of pixels and determine a second signal reading on the basis of the image data comprising the at least one of the second plurality of pixels. The processing unit is configured to determine a temperature of the object of interest, the determination comprising utilization of a ratio of the first signal reading to the second signal reading. The output unit is configured to output the determined temperature.

In an example, at least one first wavelength selective filter is positioned over the first plurality of pixels of the detector to provide the first wavelength selectivity.

In an example, at least one second wavelength selective filter is positioned over the second plurality of pixels of the detector to provide the second wavelength selectivity.

In an example, the first plurality of pixels are located within an around the second plurality of pixels.

In an example, the pixels of the first plurality of pixels and pixels of the second plurality of pixels alternate across the detector.

In an example, the first plurality of pixels are located over a section of the detector separated from a section of the detector where the second plurality of pixels are located.

In a third aspect, there is provided a system for temperature sensing of an object of interest, comprising:

- at least one infrared camera;
- a reference object;
- a heater;

- a temperature sensor;
- a processing unit; and
- an output unit.

The at least one infrared camera is configured to acquire image data of an object of interest and acquire image data of the reference object. The infrared camera is configured to provide the image data of the object of interest and the image data of the reference object to the processing unit. The processing unit is configured to determine a first signal reading on the basis of the image data of the object of interest and determine a second signal reading on the basis of the image data of the reference object. The heater is configured to heat the reference object. The temperature sensor is configured to determine a surface temperature signal of the reference object. The processing unit is configured to control the heater until a magnitude of the first signal reading is equal to a magnitude of the second signal reading. The processing unit is configured to determine a first temperature signal relating to the object of interest, when the magnitude of the first signal reading is equal to the magnitude of the second signal reading. A first plurality of pixels of a detector of the at least one infrared camera has a first wavelength selectivity. A second plurality of pixels of the detector has a second selectivity different to the first wavelength selectivity. Acquisition of the image data of the object of interest comprises utilization of at least one of the first plurality of pixels and utilization of at least one of the second plurality of pixels. The processing unit is configured to determine a third signal reading on the basis of the image data of the object of interest comprising the at least one of the first plurality of pixels and determine a fourth signal reading on the basis of the image data comprising the at least one of the second plurality of pixels. The processing unit is configured to determine a second temperature signal relating to the object of interest, the determination comprising utilization of a ratio of the third signal reading to the fourth signal reading. The processing unit is configured to determine a third temperature signal relating to the object of interest on the basis of the first temperature signal and the second temperature signal. The output unit is configured to output the third temperature signal.

In an example, acquisition of the image data of the reference object comprises utilization of at least one of the first plurality of pixels and utilization of at least one of the second plurality of pixels. The processing unit is configured to determine a fifth signal reading on the basis of the image data comprising the at least one of the first plurality of pixels and determine a sixth signal reading on the basis of the image data comprising the at least one of the second plurality of pixels. The processing unit is configured to determine a optically derived temperature signal relating to the reference object, the determination comprising utilization of a ratio of the fifth signal reading to the sixth signal reading. The processing unit is configured to heat the reference object until a magnitude of the optically derived temperature signal relating to the reference object equals a magnitude of temperature of the object of interest determined through utilization of the ratio of the first signal reading to the second signal reading. The output unit is configured to output the magnitude of the optically derived temperature signal relating to the reference object.

In other words, the system determines the temperature of an object of interest on the basis of the wavelengths of emission from the surface of the object. Also, the temperature of the object of interest is determined through matching the radiation emission from the object with a reference object, both spectrally and non-spectrally. In this way, an accurate temperature measurement is determined, that also provides an understanding of the error or accuracy of that measurement. One camera using a detector with spectrally discriminating pixels can be used to determine all of the above camera derived temperature signals.

In a fourth aspect, there is provided a system for temperature sensing of an object of interest, comprising:

- an apparatus for temperature sensing of an object of interest according to the first aspect and optionally any associated compatible example; and
- an apparatus for temperature sensing of an object of interest according to the second aspect and optionally any associated compatible example.

Thus, the methods to determine the temperature of an object of interest can run separately in order to provide a more robust temperature measurement.

In a fifth aspect, there is provided a method for temperature sensing of an object of interest, comprising:

a) acquiring with an infrared camera image data of an object of interest;
b) providing the image data of the object of interest to a processing unit;
c) determining by the processing unit a first signal reading on the basis of the image data of the object of interest;
d) heating with a heater a reference object;
e) determining a surface temperature signal of a surface of the reference object with a temperature sensor;
f) acquiring with the infrared camera image data of the reference object;
g) providing the image data of the reference object to the processing unit;
h) determining by the processing unit a second signal reading on the basis of the image data of the reference object;
i) controlling the heater by the processing unit until a magnitude of the first signal reading is equal to a magnitude of the second signal reading; and
j) outputting by an output unit the temperature signal determined by the temperature sensor when the magnitude of the first signal reading is equal to the magnitude of the second signal reading.

In a sixth aspect, there is provided a method for temperature sensing of an object of interest, comprising:

a) acquiring with an infrared camera image data of an object of interest comprising utilization of at least one of a first plurality of pixels and utilization of at least one of a second plurality of pixels, wherein the infrared camera has a detector, wherein a first plurality of pixels of the detector has a first wavelength selectivity, and wherein a second plurality of pixels of the detector has a second selectivity different to the first wavelength selectivity;
b) providing the image data of the object of interest to a processing unit;
c) determining by the processing unit a first signal reading on the basis of the image data comprising the at least one of the first plurality of pixels;
d) determining by the processing unit a second signal reading on the basis of the image data comprising the at least one of the second plurality of pixels;
e) determining by the processing unit a temperature of the object of interest, the determination comprising utilization of a ratio of the first signal reading to the second signal reading; and
f) outputting by an output unit the determined temperature.

The above aspects and examples will become apparent from and be elucidated with reference to the embodiments described hereinafter.

- As additional embodiment: It make sense to have several reference bodies, in order to monitor several temperatures in the IR-picture at the same time.

- The heater could also contain a cooler, e.g. for winter use cases and for quick cool down in case of multiple time series of measurements.

- Furthermore it make sense to have several (not just 2) pixel classes with different filters and a correspondingly trivially extended signal processing. This may give several independent estimates of the temperature of objects in the picture. The results could be averaged.

BRIEF DESCRIPTION OF THE DRAWINGS

Exemplary embodiments will be described in the following with reference to the following drawings:

Fig. 1 shows a schematic representation of an example of an apparatus for temperature sensing of an object of interest;

Fig. 2 shows a schematic representation of an example of a an apparatus for temperature sensing of an object of interest;

Fig. 3 shows a method for temperature sensing of an object of interest;

Fig. 4 shows a method for temperature sensing of an object of interest;

Fig. 5 shows an example of an infrared (IR) camera observing a reference object and an object of interest;

Fig. 6 shows an example of an infrared (IR) camera observing a reference object and three objects of interest with applicability to a three phase system;

Fig. 7 shows a set of black-body wavelength distributions for varying temperatures;

Fig. 8 shows temperature curves for different wavelengths;

Fig. 9 shows an example of the signal ratios over two different wavelength ranges as a function of temperature; and

Fig. 10 shows an example of a camera chip or detector with alternating filters placed in front of the pixels; and

Fig. 11 shows an example of a camera chip or detector covered by two filters generating two sections with different spectral sensitivity.

DETAILED DESCRIPTION OF EMBODIMENTS

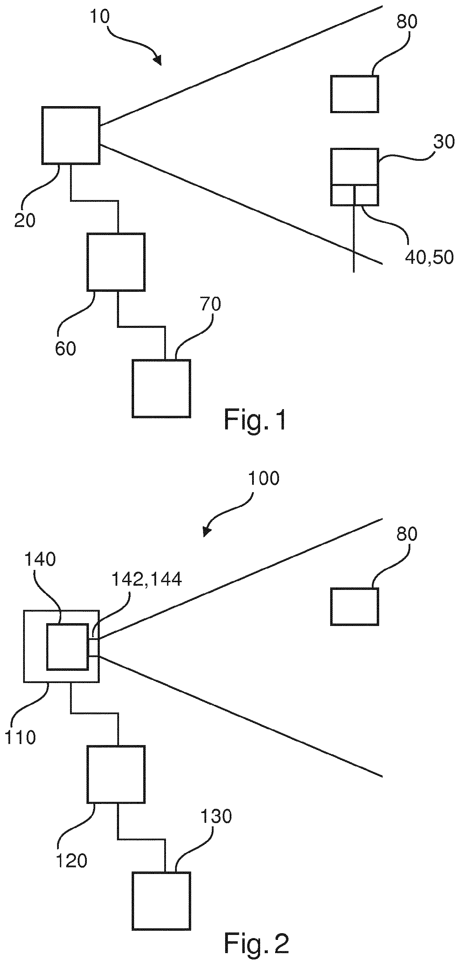

Fig. 1 shows an example of an apparatus 10 for temperature sensing of an object of interest. The apparatus 10 comprises an infrared camera 20, a reference object 30, a heater 40, a temperature sensor 50, a processing unit 60, and an output unit 70. The infrared camera 20 is configured to acquire image data of an object of interest 80 and acquire image data of the reference object 30. The infrared camera 20 is configured also to provide the image data of the object of interest 80 and the image data of the reference object 30 to the processing unit 60. The processing unit 60 is configured to determine a first signal reading on the basis of the image data of the object of interest 80 and determine a second signal reading on the basis of the image data of the reference object 30. The heater 40 is configured to heat the reference object 30. The temperature sensor 50 is configured to determine a surface temperature signal of the reference object 30. The processing unit 60 is configured to control the heater 40 until a magnitude of the first signal reading is equal to a magnitude of the second signal reading. The output unit 70 is configured to output the temperature signal determined by the temperature sensor 50 when the magnitude of the first signal reading is equal to the magnitude of the second signal reading.

In an example, at least one pixel of a detector of the infrared camera is used for the first signal. In an example, at least one pixel of the detector of the infrared camera is used for the second signal.

In an example, the apparatus utilizes more than one reference object that can be heated in the manner of the first reference objects. If there are several different coatings in the investigated system, and at locations where the temperature is planned to be measured (e.g. one coating material on bus bars, and a second one on the bus bar connections, then one may have several reference bodies or one body with several coatings on its surface in order to determine the temperatures of these parts of the investigated system.

In an example, the image data of the reference object is acquired at the same time as the image data of the object of interest. In an example, the image data of the reference object is acquired at a different time as the image data of the object of interest, for example through consecutively imaging the reference object and the object of interest, back and forth, whilst the reference object is heated, or acquiring the image date for the object of interest, and then imaging the reference object as it is heated until its image signal matches that previously acquired for the object of interest.

In an example the camera might be moved to change the field of view for acquisition of different objects of interest or reference objects.

In an example, the object of interest is part of a medium voltage (MV) switchgear. In an example, the object of interest is a live bus bar or a part of the MV breaker or a MV cable.

Thus, the apparatus has application in a gas insulated switch gear, where temperature measurements can be influenced for example by the above described effects as well as by the presence of SF6, where the present apparatus enables the accurate determination of an object's temperature in such situations. Furthermore, application can be provided for the monitoring of outdoor equipment, where the overall environment can be considered to be not well controlled.

According to an example, the heater is attached to the reference object.

According to an example, the temperature sensor is attached to the reference object.

According to an example, the temperature sensor is a thermocouple.

According to an example, the temperature sensor is a Pt100 sensor.

In an example heating and temperature measurement can be performed using kapton-embedded Pt100 structures, In this example the kapton-embedded structures would serve as reference object. Structures of the same Kapton material can be applied to the bodies which have to be measured.

According to an example, a surface of the reference object is configured to match a surface of the object of interest.

According to an example, a surface treatment of the reference object is the same as a surface treatment of the object of interest.

According to an example, a coating or paint on the surface of the reference object is the same as a coating or paint on the surface of the object of interest.

According to an example, the reference object is hollow.

According to an example, a material of the reference object has a high heat conductivity.

According to an example, a shape of the reference object is quadrilateral.

According to an example, a surface of the reference object is configured to have a high emissivity.

According to an example, a magnitude of an angle between a normal to a detector of the infrared camera and the reference object is substantially the same as a magnitude of an angle between the normal to the detector of the infrared camera and the object of interest.

In an example, a magnitude of an angle between a normal to a surface of the reference object and the infrared camera is substantially the same as a magnitude of an angle between a normal to a surface of the object of interest and the infrared camera.

In other words, the angles of observations are the same, thereby mitigating the effects of emissivity of the reference body changing with angle.

According to an example, the processing unit is configured to acquire the second signal and the temperature signal whilst controlling the heater to sweep the temperature of the reference object over a range of interest.

Fig. 2 shows an example of an apparatus 100 for temperature sensing of an object of interest. The apparatus 100 comprises an infrared camera 110, a processing unit 120, and an output unit 130. The infrared camera 110 has a detector 140. A first plurality of pixels 142 of the detector 140 has a first wavelength selectivity. A second plurality of pixels 144 of the detector 140 has a second selectivity different to the first wavelength selectivity. The infrared camera 110 is configured to acquire image data of an object of interest 80 comprising utilization of at least one of the first plurality of pixels and utilization of at least one of the second plurality of pixels. The infrared camera 110 is configured also to provide the image data of the object of interest to the processing unit 120. The processing unit 120 is configured to determine a first signal reading on the basis of the image data comprising the at least one of the first plurality of pixels and determine a second signal reading on the basis of the image data comprising the at least one of the second plurality of pixels. The processing unit 120 is configured also to determine a temperature of the object of interest, the determination comprising utilization of a ratio of the first signal reading to the second signal reading. The output unit 130 is configured to output the determined temperature.

According to an example, at least one first wavelength selective filter is positioned over the first plurality of pixels of the detector to provide the first wavelength selectivity.

According to an example, at least one second wavelength selective filter is positioned over the second plurality of pixels of the detector to provide the second wavelength selectivity.

According to an example, the first plurality of pixels are located within an around the second plurality of pixels.

According to an example, the pixels of the first plurality of pixels and pixels of the second plurality of pixels alternate across the detector.

According to an example, the first plurality of pixels are located over a section of the detector separated from a section of the detector where the second plurality of pixels are located.

The apparatus as shown in Figs. 1-2 can operate together to form one or more systems for temperature sensing of an object of interest. One system can operate with two separate cameras operating in a manner as described with respect to Fig. 1 and Fig. 2. Another system can operate with one camera, that has appropriate wavelength selective filters over certain pixels, and operate in a manner that combines the techniques as shown in and discussed with respect to Fig. 1 and Fig. 2.

Therefore, an example of a system 150 for temperature sensing of an object of interest comprises at least one infrared camera 20, 110, a reference object 30, a heater 40, a temperature sensor 50, a processing unit 60, 120, and an output unit 70, 130. The at least one infrared camera 20, 110 is configured to acquire image data of an object of interest 80 and acquire image data of the reference object 30. The infrared camera 20, 110 is configured also to provide the image data of the object of interest 80 and the image data of the reference object 30 to the processing unit 60, 120. The processing unit 60, 120 is configured to determine a first signal reading on the basis of the image data of the object of interest 80 and determine a second signal reading on the basis of the image data of the reference object 30; The heater 40 is configured to heat the reference object 30. The temperature sensor 50 is configured to determine a surface temperature signal of the reference object 30. The processing unit 60, 120 is configured to control the heater 40 until a magnitude of the first signal reading is equal to a magnitude of the second signal reading. The processing unit is configured to determine a first temperature signal relating to the object of interest 80, when the magnitude of the first signal reading is equal to the magnitude of the second signal reading. A first plurality of pixels 142 of a detector 140 of the at least one infrared camera 20, 110 has a first wavelength selectivity. A second plurality of pixels 144 of the detector 140 has a second selectivity different to the first wavelength selectivity. Acquisition of the image data of the object of interest 80 comprises utilization of at least one of the first plurality of pixels 142 and utilization of at least one of the second plurality of pixels 144. The processing unit 60, 120 is configured to determine a third signal reading on the basis of the image data comprising the at least one of the first plurality of pixels 142 and determine a fourth signal reading on the basis of the image data comprising the at least one of the second plurality of pixels 144. The processing unit 60, 120 is configured to determine a second temperature signal relating to the object of interest 80, the determination comprising utilization of a ratio of the third signal reading to the fourth signal reading. The processing unit 60, 120 is configured to determine a third temperature signal relating to the object of interest 80 on the basis of the first temperature signal and the second temperature signal. The output unit 70 is configured to output the third temperature signal.

According to an example, acquisition of the image data of the reference object comprises utilization of at least one of the first plurality of pixels and utilization of at least one of the second plurality of pixels. The processing unit is configured to determine a fifth signal reading on the basis of the image data of the reference object comprising the at least one of the first plurality of pixels and determine a sixth signal reading on the basis of the image data comprising the at least one of the second plurality of pixels. The processing unit is configured to determine a optically derived temperature signal relating to the reference object, the determination comprising utilization of a ratio of the fifth signal reading to the sixth signal reading. The processing unit is configured also to heat the reference object until a magnitude of the optically derived temperature signal relating to the reference object equals a magnitude of temperature of the object of interest determined through utilization of the ratio of the first signal reading to the second signal reading. The output unit is configured to output the magnitude of the optically derived temperature signal relating to the reference object.

In an example, the heater is attached to the reference object.

In an example, the temperature sensor is attached to the reference object.

In an example, the temperature sensor is a thermocouple.

In an example, the temperature sensor is a Pt100 sensor.

In an example, a surface of the reference object is configured to match a surface of the object of interest.

In an example, a surface treatment of the reference object is the same as a surface treatment of the object of interest.

In an example, a coating or paint on the surface of the reference object is the same as a coating or paint on the surface of the object of interest.

In an example, the reference object is hollow.

In an example, the reference object has a high heat conductivity.

In an example, a shape of the reference object is quadrilateral.

In an example, a surface of the reference object is configured to have a high emissivity.

In an example, a magnitude of an angle between a normal to a detector of the infrared camera and the reference object is substantially the same as a magnitude of an angle between the normal to the detector of the infrared camera and the object of interest.

In an example, the processing unit is configured to acquire the second signal and the temperature signal whilst controlling the heater to sweep the temperature of the reference object over a range of interest.

In an example, at least one first wavelength selective filter is positioned over the first plurality of pixels of the detector to provide the first wavelength selectivity.

In an example, at least one second wavelength selective filter is positioned over the second plurality of pixels of the detector to provide the second wavelength selectivity.

In an example, the first plurality of pixels are located within an around the second plurality of pixels.

In an example, the pixels of the first plurality of pixels and pixels of the second plurality of pixels alternate across the detector.

In an example, the first plurality of pixels are located over a section of the detector separated from a section of the detector where the second plurality of pixels are located.

As described above, a system can operate in more than one way and therefore, an example of a system 160 for temperature sensing of an object of interest comprises an apparatus 10 for temperature sensing of an object of interest as described with respect to any one or combination of compatible example described with reference to Fig. 1. The system 160 also comprises and an apparatus 100 for temperature sensing of an object of interest as described with respect to any one or combination of compatible example described with reference to Fig. 2.

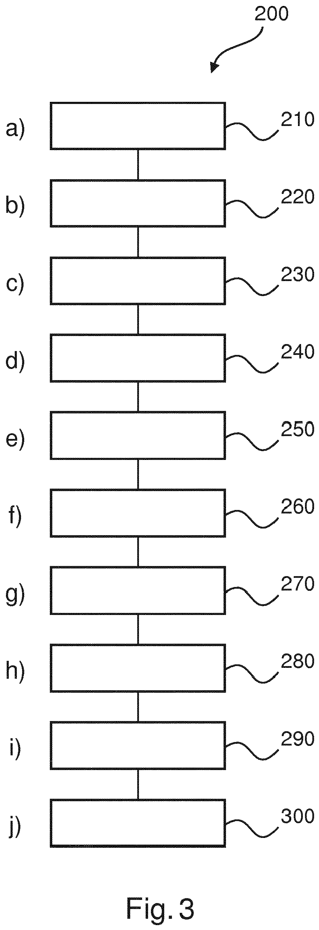

Fig. 3 shows a method 200 for temperature sensing of an object of interest in its basic steps. The method 200 comprises:

in an acquiring step 210, also referred to as step a), acquiring with an infrared camera image data of an object of interest;

in a providing step 220, also referred to as step b), providing the image data of the object of interest to a processing unit;

in a determining step 230, also referred to as step c), determining by the processing unit a first signal reading on the basis of the image data of the object of interest;

in a heating step 240, also referred to as step d), heating with a heater a reference object;

in a determining step 250, also referred to as step e), determining a surface temperature signal of a surface of the reference object with a temperature sensor;

in an acquiring step 260, also referred to as step f), acquiring with the infrared camera image data of the reference object;

in a providing step 270, also referred to as step g), providing the image data of the reference object to the processing unit;

in a determining step 280, also referred to as step h), determining by the processing unit a second signal reading on the basis of the image data of the reference object;

in a controlling step 290, also referred to as step i), controlling the heater by the processing unit until a magnitude of the first signal reading is equal to a magnitude of the second signal reading; and

in an outputting step 300, also referred to as step j), outputting by an output unit the temperature signal determined by the temperature sensor when the magnitude of the first signal reading is equal to the magnitude of the second signal reading.

In an example, the method comprises matching a surface of the reference object to a surface of the object of interest.

In an example, a surface treatment of the reference object is the same as a surface treatment of the object of interest.

In an example, a coating or paint on the surface of the reference object is the same as a coating or paint on the surface of the object of interest.

In an example, the method comprises acquiring the second signal and the temperature signal whilst controlling the heater to sweep the temperature of the reference object over a range of interest.

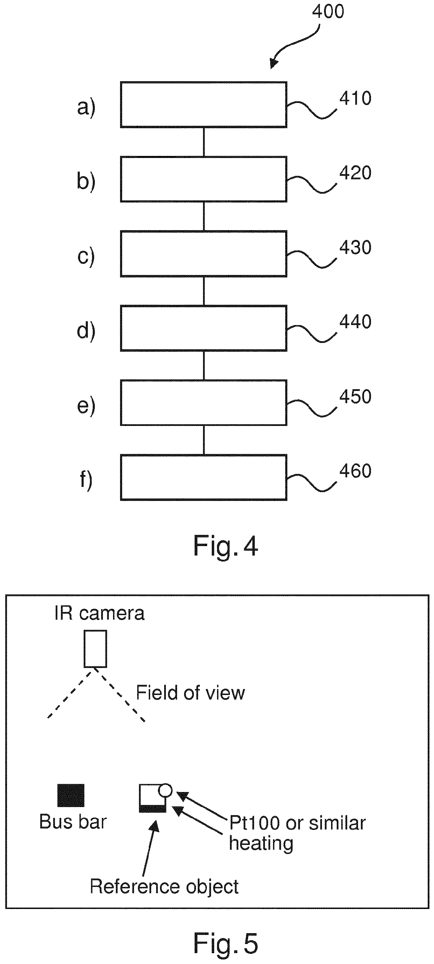

Fig. 4 shows a method 400 for temperature sensing of an object of interest in its basic steps. The method 400 comprises:

in an acquiring step 410, also referred to as step a), acquiring with an infrared camera image data of an object of interest comprising utilization of at least one of a first plurality of pixels and utilization of at least one of a second plurality of pixels, wherein the infrared camera has a detector, wherein a first plurality of pixels of the detector has a first wavelength selectivity, and wherein a second plurality of pixels of the detector has a second selectivity different to the first wavelength selectivity;

in a providing step 420, also referred to as step b), providing the image data of the object of interest to a processing unit;

in a determining step 430, also referred to as step c), determining by the processing unit a first signal reading on the basis of the image data comprising the at least one of the first plurality of pixels;

in a determining step 440, also referred to as step d), determining by the processing unit a second signal reading on the basis of the image data comprising the at least one of the second plurality of pixels;

in a determining step 450, also referred to as step e), determining by the processing unit a temperature of the object of interest, the determination comprising utilization of a ratio of the first signal reading to the second signal reading; and

in an outputting step, also referred to as step f), outputting by an output unit the determined temperature.

In an example, the method comprises positioning at least one first wavelength selective filter over the first plurality of pixels of the detector to provide the first wavelength selectivity.

In an example, the method comprises positioning at least one second wavelength selective filter over the second plurality of pixels of the detector to provide the second wavelength selectivity.

In an example, the first plurality of pixels are located within and around the second plurality of pixels.

In an example, the pixels of the first plurality of pixels and pixels of the second plurality of pixels alternate across the detector.

In an example, the first plurality of pixels are located over a section of the detector separated from a section of the detector where the second plurality of pixels are located.

The apparatuses, systems and methods as described above with respect to Figs. 1-4 are explained in specific detail with respect to Figs. 5-11.

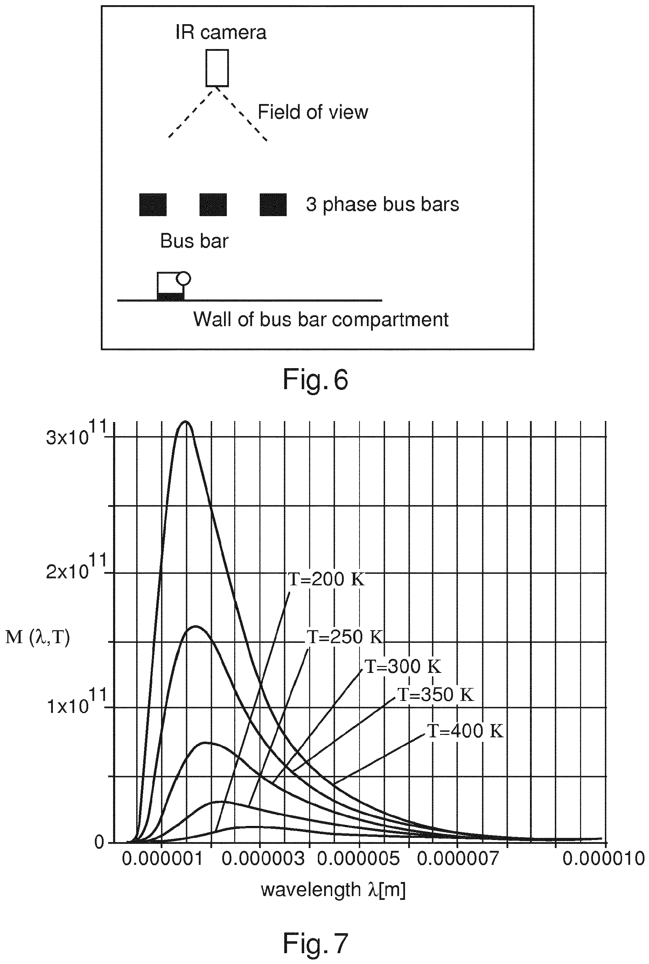

Fig. 5 shows an IR camera observing two objects: The object of interest e.g. bus bar and a reference object. The temperature of the reference object can be controlled by a heater and its temperature can be measured by a conventional temperature sensor. In summary, two objects are placed in the field of view of an IR camera: the object of interest which temperature is to be measured (e.g. life bus bar); and a second reference object equipped with a heating device and a conventional temperature sensor (e.g. Pt100). The IR camera is reading data from both objects: S_obj = reading of object & S_ref = reading of reference object. The heater of the reference object is controlled so that S_ref equals S_obj. In this case the temperature of the object is identical to the temperature of the reference object. The latter is provided by the conventional temperature sensor. The technique can be improved by ensuring that the emissivity of both objects is identical e.g. same coating is applied to the surfaces. The technique can be extended to observing more than one object of interest, as shown in Fig. 6 relating to an installation for a three phase system. As shown in these figures the reference object does not need to be placed at the same distance to the IR array as the object of interest (bus bar). Also the size of the reference objct does not need to be the same as the bus bar size. In a realistic installation the reference object may be mounted at a wall of e.g. a switchgear compartment right behind the bus bars (as shown in Fig 6).

It is to be noted that present apparatus can also be used to measure the emissivity of an object's surface as now explained. An appropriate camera can be used as infrared thermometer which infers temperature from a portion of the thermal radiation emitted by the object being measured. By knowing the amount of infrared energy emitted by the object and its emissivity, the object's temperature can often be determined. The design essentially consists of a lens to focus the infrared thermal radiation on to a detector, which converts the radiant power to an electrical signal that can be displayed in units of temperature after being calibrated. This permits temperature measurement from a distance without contact with the object to be measured. A non-contact infrared thermometer is useful for measuring temperature under circumstances where thermocouples or other probe-type sensors cannot be used or do not produce accurate data for a variety of reasons, e.g. if electrical contact to the surface of interest has to be avoided.

Now, referring to the presently described apparatus for an object which emissivity is not known the emissivity can be determined as follows: The object is equipped with e.g. a Pt100 sensor. An IR sensor is used to observe the object and obtain a temperature reading. In the calibration parameters of the IR sensor the value of the emissivity is tuned until the IR sensor reading matches the Pt100 sensor reading. As a result the emissivity of the object is known. Note that the emissivity may depend on wavelength and temperature. Therefore, the measured emissivity is only valid for the sensitive spectral region of the IR sensor. To account for the temperature dependence a more complex calibration routine can be performed.

Continuing with Figs. 5-6, the temperature of the bus bar is determined by the following process:

- The IR camera is reading data from both objects:

    ○ S_obj = reading of object
    ○ S_ref = reading of reference object.

- The heater of the reference object is controlled so that S_ref equals S_obj.
- In this case the temperature of the object is identical to the temperature of the reference object.
- The temperature of the reference object is provided by the conventional temperature sensor.

One reference object may be used to determine the temperature of several bus bars or objects of interest:

- By repeating the above mentioned steps to measure the temperature for each object of interest.
- In a dynamical manner by steady increase of the temperature of the reference object and continuously reading image data from the IR sensor. An image processing algorithm could do the matching of S_ref = S_obj to that the respective temperature values is determined for each object of interest during the temperature sweep.
- Alternatively, one can determine the functional relation S_ref(T) by this type of sweeps at certain time intervals, and use it as calibration characteristics for the IR measurement array.

As a generalization a cooling device could be added to the reference object, to:

- Measure object temperature below ambient temperature
- To reduce measurement down time as the reference object can be cooled to a temperature of interest rapidly.

In particular, a Peltier element (or other heat pump) could be used to efficiently heat or cool the reference object.

The following benefits are provided: its inherent robustness against instabilities of the emitting surfaces and/or optical system, where the following are addressed/mitigated:

- Emissivity degradation: Emissivity of a surface may change over several years. For example bare copper surfaces will oxidize. This leads to a strong change in emissivity. Typically copper bus bars are coated by paint or covered by a tape to increase the value of the emissivity for better signal to noise ratio. In this case the emissivity may degrade over long time ranges (10-20 years) due to thermal aging or outgasing.
- Temperature dependence of emissivity: Emissivity is temperature dependent. The detailed behavior is a material property of the surface material. In most applications this effect is accepted and contributes to the measurement error. Alternatively, it is taken into account by prior calibration of the IR sensor system for a specific surface material.
- Influence of IR-absorbent gases or liquids: The IR radiation emitted by the heated object is transmitted via an atmosphere or liquid to the IR sensor. In general the IR radiation may get absorbed. Therefore the IR sensor system needs to be calibrated for a specific atmosphere (mostly calibrated for ambient air). However several factors might influence the transmission properties, e.g. humidity, as water is a good IR absorber, or dust which might scatter IR radiation. Furthermore, for an operation of an IR sensor in a gas insulated switchgear this influence becomes very important: SF6 is highly absorbing IR radiation. Additionally, the transmittance also depends on the gas density which may change in a switchgear. For best cancelation of these absorption effects the distance between the reference object and the camera needs to similar to the distance between camera and object of interest. Similarly, operation inside an oil-filled enclosure, such as a transformer, could be imagined.
- Furthermore, the viewport material (which is needed if the IR sensor is to be mounted outside the gas vessel) will cause significant absorption.
- Deposits on lens: Over time dust or water/condensation (humidity or rain) may collect on the lens or IR window. This will lead to an error of the temperature measurement. These effects would hinder a continuous monitoring application in an outdoor environment.
- Bias of IR detector due to ambient thermal influence: Low cost IR array sensors are based on the thermopile principle. These sensors measure a temperature difference between the IR absorbing area and the chip substrate. Therefore precise knowledge of the absolute chip temperature is important. Furthermore the absorbing area captures IR radiation from its surrounding sensor housing which is needed to support the IR lens in front of the sensor. For compensation of these effects by prior calibration it is assumed that the housing temperature is equal to the chip temperature. Therefore any thermal gradient along the housing leads to measurement error.

As described above with respect to Fig. 2, a dual wavelength concept of temperature measurement is provided, that can be used in its own right to determine temperatures or be used along with the apparatus using a heated reference object. Specific details are now discussed in more details. The radiant energy needs to be measured in two different wavelength ranges. From the ratio of these measurements the temperature can be inferred as, for a grey body, this ratio is a unique function of the temperature only. The emissivity value is not required.

The black-body spectral energy density we denote according to Planck's law as:

$$M := (\lambda, T) \to \frac{8 \cdot \pi \cdot h \cdot c^2}{\lambda^5} \cdot \frac{1}{e^{\frac{h \cdot c}{\lambda \cdot k \cdot T}} - 1}$$

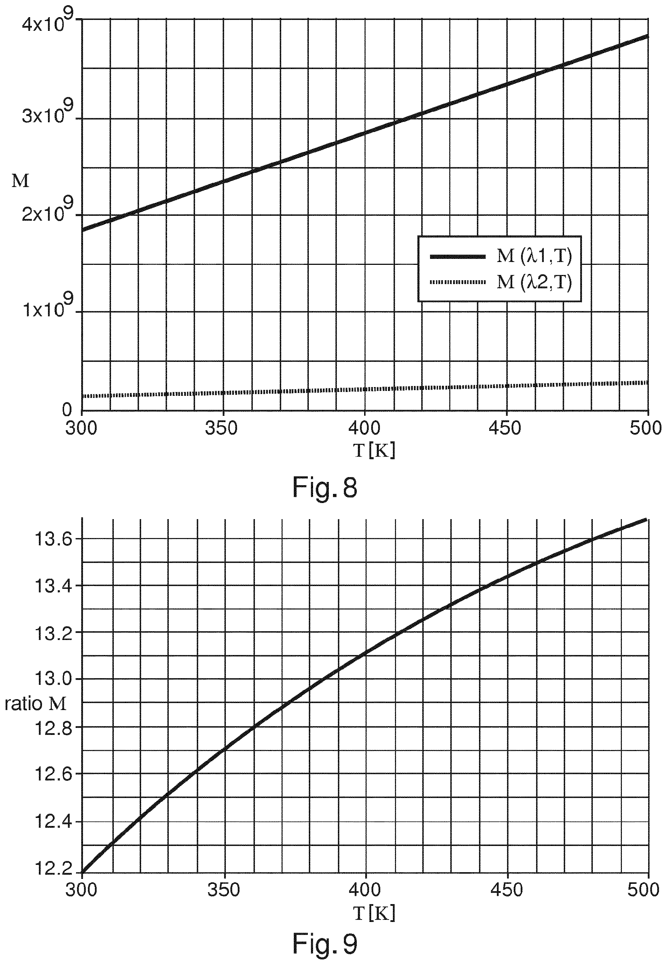

Fig. 7 then shows a set of black-body wavelength distributions for varying temperature, with Fig. 8 showing temperatures curves for lambda1 =10 microns, lambda2=20 microns.

Their dimensionless ratio,

$$ratioM := T \mapsto \frac{M(\lambda 1, T)}{M(\lambda 2, T)}$$

which is independent of emissivity for grey bodies, can be measured, and is a bijective (one-to-one) function of temperature, as shown in Fig. 9.

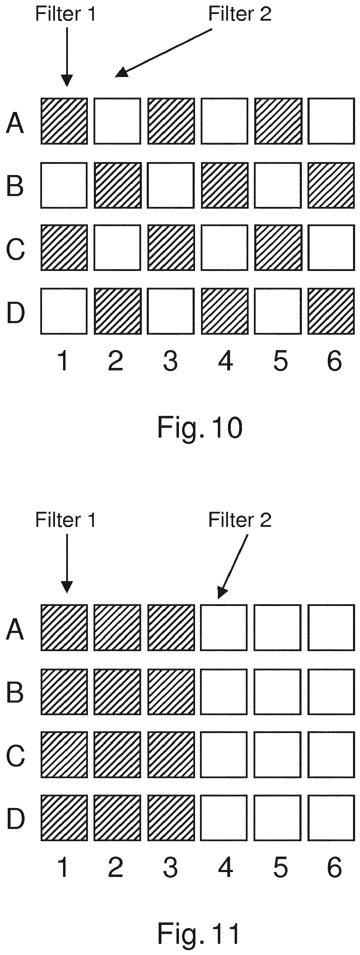

The present apparatus, as described with respect to Fig. 2, can use a low-cost infrared camera, modified by filters as shown in Figs. 10-11.

Fig. 10 shows a camera chip with alternating filters placed in front of the pixels. In electrical equipment the hot spots are typically located on bus bars. These bus bars consist of rather large and straight copper bars. Furthermore heat conduction in such a copper bar is high, so that a rather large region with almost homogeneous temperature exists. Therefore, the neighboring pixels of the IR camera with the chip shown in Fig. 10 will almost receive the same amount of infrared radiation emitted by the bus bar. Therefore, the IR camera equipped with alternating filters on chip level can utilize these alternating neighboring pixels to calculate the temperature by the dual wavelength method.

Fig. 11 shows an alternative geometry, with a camera chip covered by two filters generating two sections with different spectral sensitivity. Here use can be made that the object being imaged, such as bus bars often consist of long and straight copper bars, are imaged over a substantial portion of the chip. Therefore, one half of the sensitive chip of the IR camera is covered by a fist spectral filter and the other half by a second spectral filter. The image of the object (bus bar) clearly needs to pass through both sections of the camera. Assuming that the bus bar is homogeneous, the temperature could be calculated by dual wavelength method from this data.

These implementation schemes allow the implementation of dual wavelength thermography at a very low cost as only cheap filters need to be attached to the camera chip during fabrication. Neither additional complex optics is needed, nor a second IR camera. These filters could be integrated into the IR camera chip, using wafer processing methods (similar to those used for color CMOS or CCD camera chips), or be distinct parts that are combined into an assembly together with the IR camera chip.

The currently described apparatuses, systems and methods, find applicability in a number of situations, with three classes briefly described for illustrative purposes:

1. MV switchgear monitoring (or more general: indoor application)
2. Monitoring of outdoor equipment (e.g. HV breakers, HV lines, power transformers)
3. Monitoring of gas insulated switchgear

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items recited in the claims. The mere fact that certain measures are re-cited in mutually different dependent claims does not indicate that a combination of these measures cannot be used to advantage. Any reference signs in the claims should not be construed as limiting the scope.

**Claims**

1. An apparatus (10) for temperature sensing of an object of interest, comprising:

   - an infrared camera (20);
   - a reference object (30);
   - a heater, cooler, or means for temperature control (40);
   - a temperature sensor (50);
   - a processing unit (60); and
   - an output unit (70);

• wherein, the infrared camera is configured to acquire image data of an object of interest (80) and acquire image data of a reference object;

• wherein, the infrared camera is configured to provide the image data of the object of interest and the image data of the reference object to the processing unit;

• wherein, the processing unit is configured to determine a first signal reading on the basis of the image data of the object of interest and determine a second signal reading on the basis of the image data of the reference object;

• wherein, the heater, cooler or other means of temperature control is configured to heat or cool the reference object;

• wherein, the temperature sensor is configured to determine a signal representative for the surface temperature of the reference object;

• wherein, the processing unit is configured to control the heater, cooler or other means of temperature control until a magnitude of the first signal reading is equal to a magnitude of the second signal reading; and

• wherein, the output unit is configured to output the temperature signal determined by the temperature sensor when the magnitude of the first signal reading is equal to the magnitude of the second signal reading.

2. Apparatus according to claim 1, wherein the heater is attached to the reference object.

3. Apparatus according to any of claims 1-2, wherein the temperature sensor is attached to the reference object.

4. Apparatus according to any of claims 1-3, wherein the temperature sensor is a thermocouple.

5. Apparatus according to claim 4, wherein the temperature sensor is a Pt100 sensor.

6. Apparatus according to any of claims 1-5, wherein a surface of the reference object is configured to match a surface of the object of interest.

7. Apparatus according to claim 6, wherein a surface treatment of the reference object is the same as a surface treatment of the object of interest.

8. Apparatus according to any of claims 6-7, wherein a coating or paint on the surface of the reference object is the same as a coating or paint on the surface of the object of interest.

9. Apparatus according to any of claims 1-8, wherein the reference object is hollow.

10. Apparatus according to any of claims 1-9, wherein a material of the reference object has a high heat conductivity.

11. Apparatus according to any of claims 1-10, wherein a shape of the reference object is quadrilateral.

12. Apparatus according to any of claims 1-11, wherein a surface of the reference object is configured to have a high emissivity.

13. Apparatus according to any of claims 1-12, wherein a magnitude of an angle between a normal to a detector of the infrared camera and the reference object is substantially the same as a magnitude of an angle between the normal to the detector of the infrared camera and the object of interest.

14. Apparatus according to any of claims 1-13, wherein the processing unit is configured to acquire the second signal and the temperature signal whilst controlling the heater to sweep the temperature of the reference object over a range of interest.

15. An apparatus (100) for temperature sensing of an object of interest, comprising:

   - an infrared camera (110);
   - a processing unit (120); and
   - an output unit (130);

      • wherein, the infrared camera has a detector (140);
      • wherein, a first plurality of pixels (142) of the detector has a first wavelength selectivity;
      • wherein, a second plurality of pixels (144) of the detector has a second selectivity different to the first wavelength selectivity;
      • wherein, the infrared camera is configured to acquire image data of an object of interest (80) comprising utilization of at least one of the first plurality of pixels and utilization of at least one of the second plurality of pixels;
      • wherein, the infrared camera is configured to provide the image data of the object of interest to the processing unit;
      • wherein, the processing unit is configured to determine a first signal reading on the basis of the image data comprising the at least one of the first plurality of pixels and determine a second signal reading on the basis of the image data comprising the at least one of the second plurality of pixels;
      • wherein, the processing unit is configured to determine a temperature of the object of interest, the determination comprising utilization of a ratio of the first signal reading to the second signal reading; and

• wherein, the output unit is configured to output the determined temperature.

16. Apparatus according to claim 15, wherein at least one first wavelength selective filter is positioned over the first plurality of pixels of the detector to provide the first wavelength selectivity.

17. Apparatus according to claim 16, wherein at least one second wavelength selective filter is positioned over the second plurality of pixels of the detector to provide the second wavelength selectivity.

18. Apparatus according to any of claims 15-17, wherein the first plurality of pixels are located within an around the second plurality of pixels.

19. Apparatus according to any of claims 15-18, wherein the pixels of the first plurality of pixels and pixels of the second plurality of pixels alternate across the detector.

20. Apparatus according to any of claims 15-18, wherein the first plurality of pixels are located over a section of the detector separated from a section of the detector where the second plurality of pixels are located.

21. A system (150) for temperature sensing of an object of interest, comprising:

- at least one infrared camera (20, 110);
- a reference object (30);
- a heater, cooler or other means of temperature control (40);
- a temperature sensor (50);
- a processing unit (60, 120); and
- an output unit (70, 130);

• wherein, the at least one infrared camera is configured to acquire image data of an object of interest (80) and acquire image data of the reference object;
• wherein, the infrared camera is configured to provide the image data of the object of interest and the image data of the reference object to the processing unit;
• wherein, the processing unit is configured to determine a first signal reading on the basis of the image data of the object of interest and determine a second signal reading on the basis of the image data of the reference object;
• wherein, the heater, cooler or other means of temperature control is configured to control the temperature of the reference object;
• wherein, the temperature sensor is configured to determine a surface temperature signal of the reference object;
• wherein, the processing unit is configured to control the heater until a magnitude of the first signal reading is equal to a magnitude of the second signal reading;
• wherein, the processing unit is configured to determine a first temperature signal relating to the object of interest, when the magnitude of the first signal reading is equal to the magnitude of the second signal reading;
• wherein, a first plurality of pixels (142) of a detector (140) of the at least one infrared camera has a first wavelength selectivity;
• wherein, a second plurality of pixels (144) of the detector has a second selectivity different to the first wavelength selectivity;
• wherein, acquisition of the image data of the object of interest (80) comprises utilization of at least one of the first plurality of pixels and utilization of at least one of the second plurality of pixels;
• wherein, the processing unit is configured to determine a third signal reading on the basis of the image data comprising the at least one of the first plurality of pixels and determine a fourth signal reading on the basis of the image data comprising the at least one of the second plurality of pixels;
• wherein, the processing unit is configured to determine a second temperature signal relating to the object of interest, the determination comprising utilization of a ratio of the third signal reading to the fourth signal reading; and
• wherein, the processing unit is configured to determine a third temperature signal relating to the object of interest on the basis of the first temperature signal and the second temperature signal; and
• wherein, the output unit is configured to output the third temperature signal.

22. System according to claim 21,

• wherein, acquisition of the image data of the reference object (30) comprises utilization of at least one of the first plurality of pixels and utilization of at least one of the second plurality of pixels;
• wherein, the processing unit is configured to determine a fifth signal reading on the basis of the image data comprising the at least one of the first plurality of pixels and determine a sixth signal reading on the basis of the image data comprising the at least one of the second plurality of pixels;

• wherein, the processing unit is configured to determine a optically derived temperature signal relating to the reference object, the determination comprising utilization of a ratio of the fifth signal reading to the sixth signal reading;

• wherein, the processing unit is configured to heat, cool or regulate the temperature of the reference object until a magnitude of the optically derived temperature signal relating to the reference object equals a magnitude of temperature of the object of interest determined through utilization of the ratio of the first signal reading to the second signal reading; and

• wherein, the output unit is configured to output the magnitude of the optically derived temperature signal relating to the reference object.

23. A system (160) for temperature sensing of an object of interest, comprising:

- an apparatus for temperature sensing of an object of interest according to any of claims 1-14; and

- an apparatus for temperature sensing of an object of interest according to any of claims 15-20.

24. A method (200) for temperature sensing of an object of interest, comprising:

a) acquiring (210) with an infrared camera image data of an object of interest;

b) providing (220) the image data of the object of interest to a processing unit;

c) determining (230) by the processing unit a first signal reading on the basis of the image data of the object of interest;

d) heating (240) with a heater, cooling with a cooler, or controlling the temperature with a means of temperature control of a reference object;

e) determining (250) a temperature signal representative for the surface of the reference object with a temperature sensor;

f) acquiring (260) with the infrared camera image data of the reference object;

g) providing (270) the image data of the reference object to the processing unit;

h) determining (280) by the processing unit a second signal reading on the basis of the image data of the reference object;

i) controlling (290) the heater by the processing unit until a magnitude of the first signal reading is equal to a magnitude of the second signal reading; and

j) outputting (300) by an output unit the temperature signal determined by the temperature sensor when the magnitude of the first signal reading is equal to the magnitude of the second signal reading.

25. An method (400) for temperature sensing of an object of interest, comprising:

a) acquiring (410) with an infrared camera image data of an object of interest comprising utilization of at least one of a first plurality of pixels and utilization of at least one of a second plurality of pixels, wherein the infrared camera has a detector, wherein a first plurality of pixels of the detector has a first wavelength selectivity, and wherein a second plurality of pixels of the detector has a second selectivity different to the first wavelength selectivity;

b) providing (420) the image data of the object of interest to a processing unit;

c) determining (430) by the processing unit a first signal reading on the basis of the image data comprising the at least one of the first plurality of pixels;

d) determining (440) by the processing unit a second signal reading on the basis of the image data comprising the at least one of the second plurality of pixels;

e) determining (450) by the processing unit a temperature of the object of interest, the determination comprising utilization of a ratio of the first signal reading to the second signal reading; and

f) outputting (460) by an output unit the determined temperature.

Fig. 1

Fig. 2

200

a)    210

b)    220

c)    230

d)    240

e)    250

f)    260

g)    270

h)    280

i)    290

j)    300

Fig. 3

400

a) ⌇410

b) ⌇420

c) ⌇430

d) ⌇440

e) ⌇450

f) ⌇460

## Fig. 4

IR camera

Field of view

Bus bar

Pt100 or similar heating

Reference object

## Fig. 5

Fig. 6

Fig. 7

Fig. 8

Fig. 9

Filter 1    Filter 2

A

B

C

D

1  2  3  4  5  6

Fig.10

Filter 1    Filter 2

A

B

C

D

1  2  3  4  5  6

Fig.11

Europäisches
Patentamt
European
Patent Office
Office européen
des brevets

# EUROPEAN SEARCH REPORT

Application Number

EP 18 18 3783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2015 009088 A1 (DRÄGERWERK AG & CO KGAA [DE]) 19 January 2017 (2017-01-19) | 1-14,24 | INV. G01J5/00 G01J5/52 G01J5/60 G01J5/10 |
| Y | * figure 1 *<br>* paragraphs [0010], [0028] * | 22,23 | |
| X | ROBERT REHM ET AL: "Status of mid-infrared superlattice technology in Germany", PROCEEDINGS OF SPIE, vol. 7222, 24 January 2009 (2009-01-24), page 72220T, XP055541683, 1000 20th St. Bellingham WA 98225-6705 USA ISSN: 0277-786X, DOI: 10.1117/12.809045 ISBN: 978-1-5106-2099-5 | 15, 18-20,25 | |
| Y | * figures 12, 13 *<br>* page 3, paragraph 4 * | 23 | |
| X | US 4 659 234 A (BROUWER NICHOLAAS L [US] ET AL) 21 April 1987 (1987-04-21) | 15-17, 20,21,25 | |
| Y | * figure 4 *<br>* column 4, lines 37-52 * | 22 | |

TECHNICAL FIELDS
SEARCHED      (IPC)

G01J

The present search report has been drawn up for all claims

| Place of search | Date of completion of the search | Examiner |
|---|---|---|
| Munich | 27 February 2019 | Parise, Berengere |

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 18 18 3783

The Search Division considers that the present European patent application does not comply with the requirements of unity of invention and relates to several inventions or groups of inventions, namely:

```
1. claims: 1-14, 24

   Apparatus for temperature sensing of an object, comprising a
   reference object having means for temperature control.
                                ---

2. claims: 15-23, 25

   Apparatus for temperature sensing having an IR camera with a
   detector having two pluralities of pixels with first and
   second wavelength sensitivities.
                                ---
```

## ANNEX TO THE EUROPEAN SEARCH REPORT
## ON EUROPEAN PATENT APPLICATION NO.

EP 18 18 3783

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2019

| Patent document cited in search report | Publication date | Patent family member(s) | Publication date |
|---|---|---|---|
| DE 102015009088 A1 | 19-01-2017 | CN 107850494 A<br>DE 102015009088 A1<br>EP 3325929 A1<br>US 2019014990 A1<br>WO 2017012697 A1 | 27-03-2018<br>19-01-2017<br>30-05-2018<br>17-01-2019<br>26-01-2017 |
| US 4659234 A | 21-04-1987 | NONE | |

EPO FORM P0459

For more details about this annex : see Official Journal of the European Patent Office, No. 12/82